Europäisches Patentamt

European Patent Office

Office européen des brevets

(11) Publication number: **0 651 134 A1**

(12) **EUROPEAN PATENT APPLICATION**
published in accordance with Art.
158(3) EPC

(21) Application number: 93916176.6

(22) Date of filing: **16.07.93**

(86) International application number:
**PCT/JP93/00991**

(87) International publication number:
**WO 94/02708 (03.02.94 94/04)**

(51) Int. Cl.6: **E21D 9/06**, G01B 7/00,
G01D 21/00

(30) Priority: **16.07.92 JP 189445/92**

(43) Date of publication of application:
**03.05.95 Bulletin 95/18**

(84) Designated Contracting States:
**DE GB**

(71) Applicant: **KABUSHIKI KAISHA KOMATSU
SEISAKUSHO**
**3-6, Akasaka 2-chome**
**Minato-ku**
**Tokyo 107 (JP)**

(72) Inventor: **SHIBATANI, Kanji, Kabushiki Kaisha
Komatsu**
**Seisakusho Kenkyusho,**
**1200, Manda**
**Hiratsuka-shi,**
**Kanagawa 254 (JP)**

(74) Representative: **Selting, Günther, Dipl.-Ing. et
al**
**Patentanwälte**
**von Kreisler, Selting, Werner**
**Postfach 10 22 41**
**D-50462 Köln (DE)**

(54) **DEVICE FOR MONITORING COLLAPSE OF NATURAL GROUND IN UNDERGROUND EXCAVATOR.**

(57) A device for accurately monitoring a collapsed portion when an underground excavator advances. Three or more combinations different from one another of a pair of conductive electrodes and a pair of detecting electrodes out of electrodes (1-8) are successively selected, and, for every combination, an electric power (17) and a voltmeter (16) are successively and switchingly connected. A specific resistance of a collapsed portion (24) is calculated for every combination on the basis of a detected voltage for each selected combination. A specific resistance for every combination as calculated above and the distance between selected conductive electrodes for every combination are successively substituted into an operational expression showing the interrelations between the calculated value of a specific resistance, the distance between selected conductive electrodes, a real specific resistance of the collapsed portion (24) in muddy water, a real specific resistance in the natural ground (22) of the collapsed portion (24) and the depth of muddy water, so that three or more expressions can be obtained. The depth of muddy water is calculated on the basis of these three or more expressions. As described above, the value of a real specific resistance is not a known one, but regarded as an unknown one, whereby the depth of muddy water is calculated. Therefore, even if the real specific resistance of the collapsed portion (24) is changed with the progress of excavation, the change can be accommodated and the depth of muddy water can be constantly and accurately calculated.

EP 0 651 134 A1

# FIG.1

TECHNICAL FIELD

The present invention relates to a device for monitoring on a real time basis how the natural ground is collapsed as such an underground excavator as a shield type excavator advances in the natural ground.

BACKGROUND ART

With a so-called shield type excavator, since the excavator is covered on its outer side with a skin plate made of metal, it is impossible from its inside to visually observe the collapsing state of the natural ground during advancement of the excavator through the natural ground. For the purpose of allowing detection of the collapse of the natural ground, there is usually provided on the surface of the skin plate such a device as to measure a distance between a shielding main body and the natural ground. One of such types of collapse monitoring devices is disclosed in Japanese Patent Application Laid-Open Publication No. 62-178689.

Disclosed in this publication is such a technique for monitoring a collapse based on a specific resistance detection system of a so-called Wenner arrangement or array that a row of eight electrodes are arranged on an electrode plate provided on the surface of an underground excavator, a first voltmeter is connected across a pair of detection electrodes disposed at a center among the eight electrodes, a power source is connected to a pair of power-supply electrodes disposed outside the pair of detection electrodes, a second voltmeter is connected across a pair of detection electrodes disposed outside the pair of power-supply electrodes, and a power source is connected across a pair of power-supply electrodes disposed outside the pair of detection electrodes. And the inner first voltmeter and the outer second voltmeter are suitably changed over depending on a collapse state to find a specific resistance of the collapsed portion on the basis of the detected voltage to thereby calculate a depth of muddy water between the excavator and the natural ground.

In this case, there is satisfied a predetermined operational expression showing a predetermined relationship among the calculated specific resistance, the distance between the selected power-supply electrodes, a real specific resistance of the muddy water part of the collapsed portion, a specific resistance of natural ground of the collapsed portion, and the depth of the muddy water. When a calculated specific resistance value obtained based on an output of the voltmeter is substituted in the operational expression with use of the real specific resistance as a known value to calculate the depth of the muddy water.

However, the value of the real specific resistance of the collapsed portion vary with time as the excavator advances and thus is not always constant. Accordingly, when the calculation is carried out with the real specific resistance fixed, the calculation per se becomes simple but lacks in the detection accuracy of the muddy water depth.

Meanwhile, the skin plate of the shield type excavator is made of electrically conductive metal from the viewpoint of its strength and has an insulator layer coated thereon. The coated layer may be peeled off with time passage as the excavator advances. This causes the metal to be exposed resulting in variations in electric potential distributions and reduction of the output of the voltmeter. For this reason, it becomes impossible to accurately detect the depth of the muddy water. Further, the exposed metal becomes rusty and the output of the voltmeter becomes again high, which results similarly in impossible accurate detection of the depth of the muddy water.

In view of such circumstances, it is a first object of the present invention to realize monitoring of a collapsed portion of the natural ground accurately at all times on a real time basis even when a specific resistance of the collapsed portion varies from time to time as an underground excavator advances through the natural ground, and a second object is to realize monitoring of a collapsed portion of the natural ground accurately at all times on a real time basis even when the state of a surface of the excavator varies with time as the excavator advances through the natural ground.

DISCLOSURE OF THE INVENTION

In accordance with a first invention as set forth in claim 1, there is provided a device for monitoring a collapsed portion in the natural ground for use with an underground excavator, in which a group of at least eight electrodes are arranged in a row on an electrode plate provided on a surface of the underground excavator, one pair of power-supply electrodes and one pair of detection electrodes located inside the power-supply electrode pair are selected from the group of electrodes, a power supply is connected to the selected power-supply electrodes and a voltmeter is connected across the selected detection electrodes to detect a voltage appearing across the selected detection electrodes, a specific resistance of the collapsed portion is calculated on the basis of the detected voltage and a current supplied across the selected power-supply electrodes, and the collapsed portion is monitored on the basis of a depth of a muddy water part between the underground excavator and the natural ground obtained from the calculated specific resistance, the device comprising:

change-over means for sequentially selecting three or more of different combinations of the one pair of power-supply electrodes and the one pair of detection electrodes to sequentially switch and connect the power supply and the voltmeter;

first calculation means for calculating, on the basis of the detected voltage of each of the combinations selected by the change-over means, a specific resistance of the collapsed portion for each of the combinations; and

second calculation means for sequentially substituting the specific resistance for each of the combinations calculated by the first calculation means and a distance between the selected power-supply electrodes for each of the combinations into an operational expression showing relationships among the specific resistance calculated by the first calculation means, the distance between the selected power-supply electrodes, a real specific resistance of a muddy water part of the collapsed portion, a real specific resistance of a ground part of the collapsed portion and a depth of the muddy water part to obtain three or more equations and for calculating the depth of the muddy water part in accordance with the three or more equations.

In accordance with a second invention as set forth in claim 3, there is provided a device for monitoring a collapsed portion in the natural ground for use with an underground excavator, in which a group of at least eight electrodes are arranged in a row on an electrode plate provided on a surface of the underground excavator, one pair of power-supply electrodes and one pair of detection electrodes located inside the power-supply electrode pair are selected from the group of electrodes, a power supply is connected to the selected power-supply electrodes and a voltmeter is connected across the selected detection electrodes to detect a voltage appearing across the selected detection electrodes, a specific resistance of the collapsed portion is calculated on the basis of the detected voltage and a current supplied across the selected power-supply electrodes, and the collapsed portion is monitored on the basis of a depth of a muddy water part between the underground excavator and the natural ground obtained from the calculated specific resistance, the device comprising:

change-over means for sequentially selecting three or more of different combinations of the one pair of power-supply electrodes and the one pair of detection electrodes to sequentially switch and connect the power supply and the voltmeter;

first calculation means for calculating, on the basis of the detected voltage for each of the combinations selected by the change-over means, a specific resistance of the collapsed portion for each of the combinations;

correction means for correcting the specific resistance calculated by the first calculation means on the basis of a predetermined correction coefficient;

second calculation means for sequentially substituting the specific resistance for each of the combinations corrected by the correction means and a distance between the selected power-supply electrodes for each of the combinations into an operational expression showing relationships among the specific resistance corrected by the correction means, the distance between the selected power-supply electrodes, a real specific resistance of a muddy water part of the collapsed portion, a real specific resistance of a natural ground part of the collapsed portion and a depth of the muddy water part to obtain three or more equations and for calculating the depth of the muddy water part in accordance with the three or more equations;

calculation processing control means, when a difference between the muddy water depth calculated by the second calculation means and a reference muddy water depth previously detected is equal to or larger than a predetermined value, for changing the correction coefficient of the correction means in accordance with the difference to repetitively execute the correcting operation of the correction means and the calculating operation of the second calculation means; and

means, when the difference is smaller than the predetermined value, for monitoring a collapse in the natural ground on the basis of the muddy water depth calculated by the second calculation means.

In accordance with a third invention as set forth in claim 6, there is provided a device for monitoring a collapsed portion in the natural ground for use with an underground excavator, in which an electrode plate made of an insulator is provided on a metal surface of the underground excavator, a group of at least four electrodes are arranged in a row on the electrode plate, one pair of power-supply electrodes and one pair of detection electrodes different from the one pair of power-supply electrodes are selected from the group of electrodes, a power supply is connected to the selected power-supply electrodes and a voltmeter is connected across the selected detection electrodes to detect a voltage appearing across the selected detection electrodes, a specific resistance of the collapsed portion is calculated on the basis of the detected voltage and a current supplied to the selected power-supply electrodes, and a collapse in the natural ground is monitored on the basis of a depth of a muddy water part between a main body of the underground excavator and the natural ground obtained from the calculated specific resistance, and in which an outer periphery of the electrode plate is surrounded by a metal having a predetermined width.

With the arrangement of the first invention, three or more combinations different from one another of a pair of power supply electrodes and a pair of detecting electrodes are successively selected, and, for every combination, a power supply and a voltmeter are successively and switchingly connected. A specific resistance of a collapsed portion is calculated for every combination on the basis of a detected voltage for each selected combination. A specific resistance for every combination as calculated above and a distance between selected conductive electrodes for every combination are successively substituted into an operational expression showing the interrelations among the calculated value of a specific resistance, the distance between selected conductive electrodes, a real specific resistance of the muddy water part if the collapsed portion, a real specific resistance in the natural ground part of the collapsed portion and the depth of muddy water, so as to obtain three or more expressions. The depth of muddy water is calculated on the basis of these three or more expressions. As described above, since the depth of muddy water is calculated with use of the value of a real specific resistance which is regarded as an unknown one, not a known one, even if the real specific resistance of the collapsed portion is changed with the progress of excavation, the change can be accommodated and the depth of muddy water can be constantly and accurately calculated.

With the arrangement of the second invention, the change-over connection of the power supply and voltmeter are sequentially carried out in a similar way to the first invention to calculate the specific resistance of the collapsed portion for each of the combinations, And the calculated specific resistance is corrected based on the predetermined correction coefficient. Meanwhile, the specific resistance for each of the combinations corrected by the correction means and a distance between the selected power-supply electrodes for each of the combinations are sequentially substituted into an operational expression showing relationships among the specific resistance corrected by the correction means, the distance between the selected power-supply electrodes, a real specific resistance of a muddy water part of the collapsed portion, a real specific resistance of a ground part of the collapsed portion and a depth of the muddy water part to obtain three or more equations. And the depth of the muddy water part is calculated in accordance with the three or more equations. When a difference between the muddy water depth calculated by the second calculation means and a reference muddy water depth previously detected is equal to or larger than a predetermined value, since this means that the condition of the surface of the excavator was changed with time, the correction coefficient is changed in accordance with the difference to repetitively execute the correcting operation and the calculating operation of the operational expression. When the difference becomes smaller than the predetermined value, monitoring of a collapse in the natural ground is carried out on the basis of the depth of the muddy water of that time.

In this way, even when the electric potential distribution of the surface of the excavator changes, the change is detected by comparison between the calculated muddy water depth and a reference muddy water depth. Thus, the correction of the specific resistance can be correctly realized and the muddy water depth can be detected always accurately.

With the arrangement of the third invention, the outer periphery of the electrode plate is surrounded by a metal having a predetermined width. For this reason, even when the surface of the excavator around the electrode plate is changed, the change will have substantially no direct influence on the output of the voltmeter and thus the substantially constant output of the voltmeter can be obtained at all times, so that the detection is always achieved accurately without being influenced by the change with time as the excavation advances.

BRIEF DESCRIPTION OF THE DRAWINGS

Fig. 1 is a cross-sectional view schematically showing an arrangement of an embodiment of an underground collapse monitoring device for an underground excavator in accordance with the present invention;

Fig. 2 is a top view of the device of Fig. 1;

Fig. 3 shows how to switch electrodes shown in Fig. 1;

Fig. 4 is a cross-sectional view showing a structure when an electrode plate in Fig. 1 is mounted to a shielding main body;

Fig. 5 is a diagram for explaining the principle of the present invention applied to the embodiment;

Fig. 6 is a flowchart showing the contents of processing executed under control of a CPU in Fig. 1;

Fig. 7 is a flowchart showing the contents of processing executed in the CPU in Fig. 1;

Fig. 8 is a flowchart showing the contents of processing executed in the CPU in Fig. 1;

Figs. 9(a) and 9(b) show graphs for explaining an analysis routine shown in Fig. 8;

Fig. 10 is a graph for explaining the analysis routine shown in Fig. 8;

Fig. 11 is a graph for explaining the analysis routine shown in Fig. 8;

Fig. 12 shows an experimental device used for explaining the chassis effect of the device of Fig. 1;

Figs. 13(a) to 13(c) show test plates for use in Fig. 12; and

Fig. 14 is a graph showing experimental results by the experimental device of Fig. 12.

## BEST MODE FOR CARRYING OUT THE INVENTION

An embodiment of an underground collapse monitoring device for an underground excavator in accordance with the present invention will be explained with reference to the accompanying drawings.

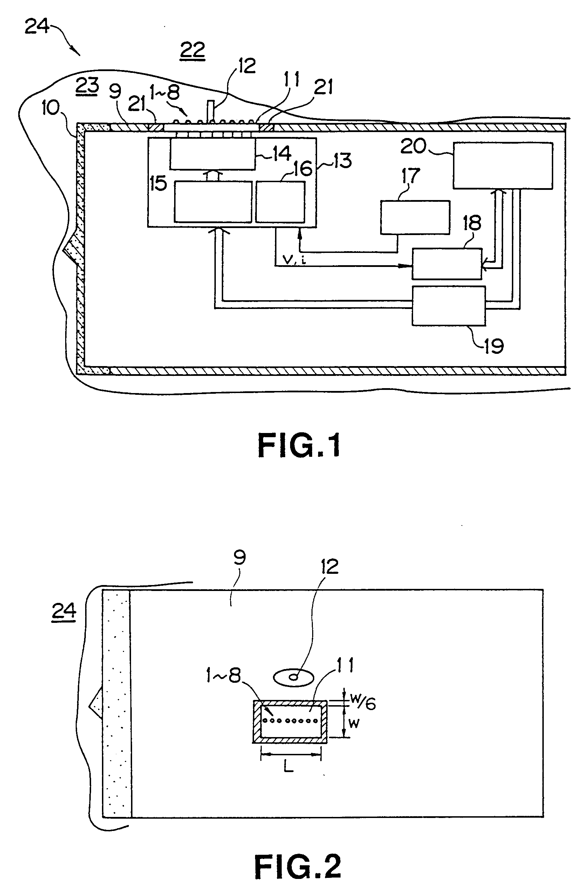

Fig. 1 shows an example of cross-sectional view of a schematic arrangement of a shield type excavator, and Fig. 2 shows a top view of the device of Fig. 1. The shield type excavator shown in these drawings advances through the natural ground while drivingly rotating a head cutter 10 to excavate earth and sand or rocky wall in the natural ground. Reference numeral 24 denotes a collapsed portion of the natural ground to be excavated, which includes a muddy water part (first layer) 23 and a natural ground part (second layer) 22.

A shielding main body 9 located behind the head cutter 10 is made of electrically conductive metal (e.g., SS41) and is electrically insulated by a coating layer applied onto its outer surface.

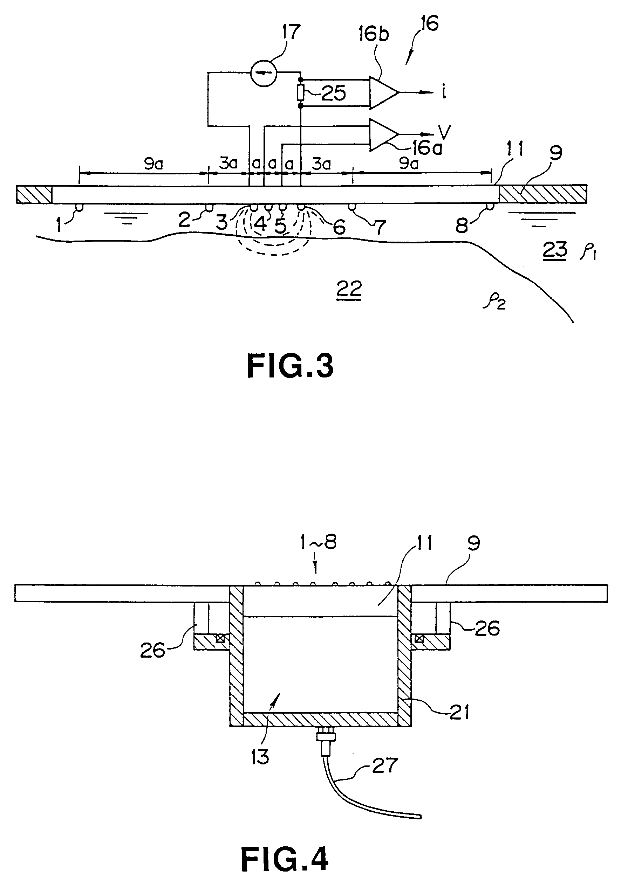

The shielding main body 9 is provided in its top with an opening into which a chassis 21 is fittedly mounted and fixed to the shielding main body 9 via a bracket 26, which mounted state is detailed in Fig. 4. Disposed within the chassis 21 are an electrode plate 11 in its upper part on which eight electrodes 1 to 8 are arranged in a row in an excavator advancement direction and an electrode change-over unit 13 in its lower part. Extended from the electrode change-over unit 13 through the chassis 21 is a cable 27 for input/output of signals to/from an external device.

The electrode plate 11 is made of such a material with a low water absorption and a high strength as to be capable of conforming to its ambient environment, for example, ultra-polyethylene (UPE). In the illustrated example, the electrode plate 11 is formed to have such a rectangle with a long side L and a short side W. With respect to distances between the eight electrodes 1 to 8, as shown in Fig. 3, a distance between the adjacent ones of the central electrodes 3, 4, 5 and 6 is set to be **a**, a distance between the outer electrodes 2 and 3 and between the outer electrodes 6 and 7 is set to be **3a**, and a distance between the more outer electrodes 1 and 2 and between the more outer electrodes 7 and 8 is set to be **9a**.

The chassis 21 is made of electrically conductive metal having a predetermined thickness, for example, stainless (SUS). In the illustrated example, the thickness of the chassis 21 is set to be experimentally W/6 for the purpose of obtaining such effect as to be described later (refer to Fig. 2).

The electrode change-over unit 13, as shown in Fig. 1, includes a mercury relay 14, a relay controller 15 and a preamplifier 16. The mercury relay 14 performs its switching operation to select from the electrodes 1 to 8 one pair of the current supply electrodes and one pair of the voltage detection electrodes disposed inside of the current supply electrode pair. A current **i** is supplied from a constant-current supply source 17 to the selected current supply electrodes and a voltage V appearing across the selected voltage detection electrodes is detected. Since such an electrode switching technique per se is disclosed in the earlier application (Japanese Patent Appln. No. 3-121505) of the present applicant and is not directly related to the subject matter of the present invention, detailed explanation thereof will be omitted here. The mercury relay 14 is switched by the relay controller 15 to realize the aforementioned selection. The relay controller 15 is controlled in response to a control signal received from a CPU 20. More in detail, the above control signal is subjected at a converter 19 to a parallel/serial conversion and applied to the relay controller 15 as a serial signal.

Fig. 3 shows how to supply the current and to detect the voltage as mentioned above. More specifically, a current flowing across both ends of a shunt resistor 25 provided in a current supply line is subjected at a preamplifier 16b to an impedance conversion and the current **i** appears at an output of the preamplifier 16b is outputted as an analog signal to a lock-in amplifier 18 shown in Fig. 1. Meanwhile, the voltage V appearing across the voltage detection electrodes is subjected at a preamplifier 16a to an impedance conversion and similarly applied as an analog signal to the lock-in amplifier 18. An output of the lock-in amplifier 18 is applied to the CPU 20 as a digital signal through, e.g., an interface of a general purpose interface bus (GP-IB). Though not shown, the CPU 20 is connected with a display to display the processed result of the CPU thereon.

Fig. 3 shows a case in which the electrodes 3 and 6 were selected as the current supply electrodes and the electrodes 4 and 5 were selected as the voltage detection electrodes. Table 1 given below shows combinations of electrodes to be switched and selected (which combinations will be referred to as electrode sets, hereinafter). The electrode set shown in Fig. 3 corresponds to a1 in the below Table 1 when the distance between the adjacent electrodes is **a**. Similarly, the electrode set a2 is when the distance between the adjacent electrodes is 3a, and the electrode set a3 is when the distance between the adjacent electrodes is 9a. The value of **a** is, for example, 2cm.

TABLE 1

| Symbol | Inter-electrode distance | Current-supply electrodes | | Voltage-detection electrodes | |
|--------|-------------------------|------|------|------|------|
| | | + | - | + | - |
| a1 | 2cm | 3 | 6 | 4 | 5 |
| a2 | 6cm | 2 | 7 | 3 | 6 |
| a3 | 18cm | 1 | 8 | 2 | 7 |

In the vicinity of the electrode plate 11, a rod 12 for collapse detection is provided on the top surface of the shielding main body 9 to be externally projected therefrom. The rod 12 is driven by such an actuator (not shown) as a motor or a hydraulic cylinder to change a degree of its stroke or projection. Accordingly, when the degree of stroke of the rod is changed so that the rod 12 abuts at its tip end against the natural ground 22, and when the then stroke is detected, it is possible on the basis of the detected stroke to detect a distance between the shield type excavator and the second layer 22, that is, a depth dr of the muddy water part 23. However, this detection is possible only when the excavator stops and impossible during the excavating operation. In the present invention, such detection is carried out when the excavator stops and on a regular basis (e.g., on every week basis), and the detected muddy water depth dr is used as a correction reference for measurements carried out on a real time basis, which will be described later.

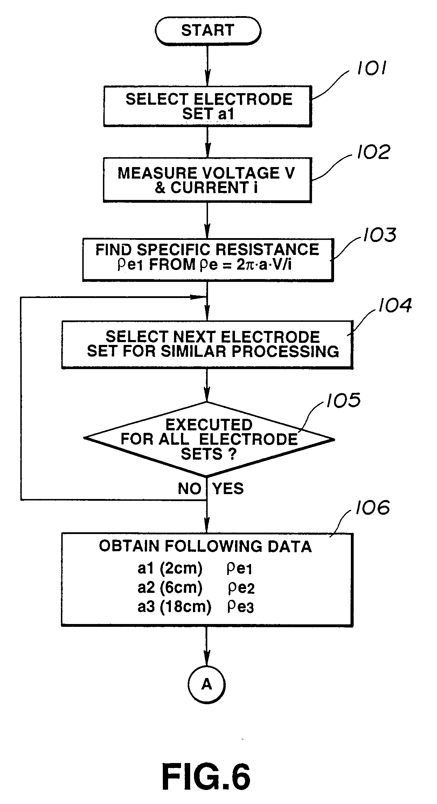

Explanation will next be made as to the contents of operations to be executed by the CPU 20 by referring to flowcharts of Figs. 6 to 8.

Explanation will first be made as to operational expressions to be applied in the embodiment.

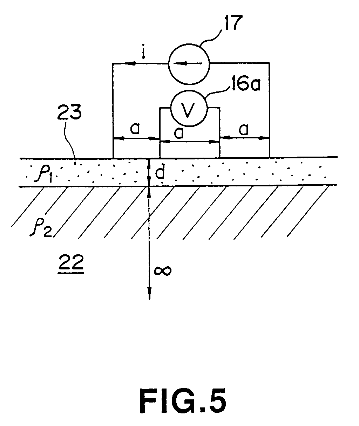

Fig. 5 is a diagram for explaining how to detect a specific resistance $\rho e$ of a vertical double-layer structure of the first layer 23 having a specific resistance $\rho 1$ and a thickness of **d** and the second layer 22 having a specific resistance of $\rho 2$, with use of a Wenner array similar to that shown in Fig. 3. Assuming that **a** denotes a distance between the adjacent electrodes, V denotes a voltage to be detected and **i** denotes a current to be detected, a so-called apparent resistivity $\rho e$ is expressed as follows.

$$\rho e = 2\pi aV/i \qquad (1)$$

As well known, the apparent resistivity obtained based on the above voltage V and current **i** can be calculated in accordance with the following expression (refer to a book entitled "Electric Probing Method", written by Shimura, issued February 25, 1965 from Shoukoudou).

$$\rho e = \rho 1 + 4\rho 1\Sigma Kn[\{1 + (2nd/a)^2\}^{-1/2} - \{4 + (2nd/a)^2\}^{-1/2}] \qquad (2)$$

where, "$^2$" means to raise to 2-nd power, n for $\Sigma$ is from 1 to $\infty$, and K is written as follows.

$$K = (\rho 2 - \rho 1)/(\rho 2 + \rho 1) \qquad (3)$$

The above expression (2) indicates that there is satisfied a predetermined relationship among the apparent resistivity $\rho e$, inter-electrode distance **a**, real specific resistance $\rho 1$ of the muddy water part 23, real specific resistance $\rho 2$ of the natural ground 22, and a depth **d** of the muddy water part. When the inter-electrode distance **a** and the specific resistance $\rho e$ obtained through the expression (1) are sequentially substituted into the expression (2) with the specific resistances $\rho 1$ and $\rho 2$ and the muddy water depth **d** as unknown values to obtain three or more expressions, the unknown values $\rho 1$, $\rho 2$ and **d** can be found. The

EP 0 651 134 A1

CPU 20 is designed to simply execute the above calculations in a short time according to an algorithm to be explained later.

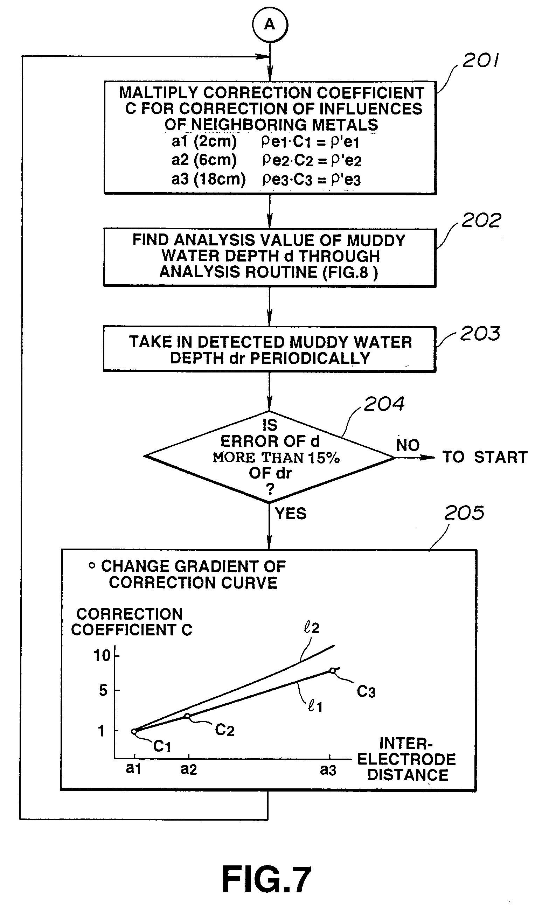

When the collapse monitoring operation starts, as shown in Fig. 6, a switching control signal is issued to the relay controller 15 to select the electrode set a1 first (step 101). The above expression (1) is calculated on the basis of the then detected voltage V and current **i** to find a specific resistance $\rho e1$ corresponding to the electrode set a1 (steps 102 and 103). Next, the relay 14 is switched to similarly select the next electrode set (a2 or a3) and to perform a similar operation (step 104). In this way, the calculation of the expression (1) is carried out for all the electrode sets a1 to a3 (step 105) to find specific resistances $\rho e1$, $\rho e2$ and $\rho e3$ corresponding to the electrode sets a1, a2 and a3 (step 106). Then the procedure is shifted to a step 201 of Fig. 7 where the calculated specific resistances $\rho e1$, $\rho e2$ and $\rho e3$ are multiplied by correction coefficients C1, C2 and C3 for correction of the influences of the metal around the electrodes 1 to 8 respectively to find correction specific resistances $\rho'e1$, $\rho'e2$ and $\rho'e3$ which follow.

$$\rho'e1 = \rho e1 \ C1 \qquad (4)$$

$$\rho'e2 = \rho e2 \ C2 \qquad (5)$$

$$\rho'e3 = \rho e3 \ C3 \qquad (6)$$

Explanation will be made as to the reason why such correction is carried out. With the shield type excavator, the main body is coated with an insulator coating at the time of factory shipping and as the excavator is installed and actually performs its excavating operation, the coating becomes peeled off. When this is considered from the viewpoint of electricity, only the insulator was present around the electrodes 1 to 8 at the time of factory shipping. As the excavator is frequently used, however, the metal underlying the insulator coating is exposed, which results in that an electric potential distribution is greatly changed. This also cause the specific resistance $\rho e$ to be decreased below its value at the time of the insulator coated state. Further, once the exposed metal gets rusty, the specific resistance $\rho e$ is again increased. For the purpose of correcting the specific resistance back to its initial state value set at the time of the factory shipping, the aforementioned correction coefficients are multiplied.

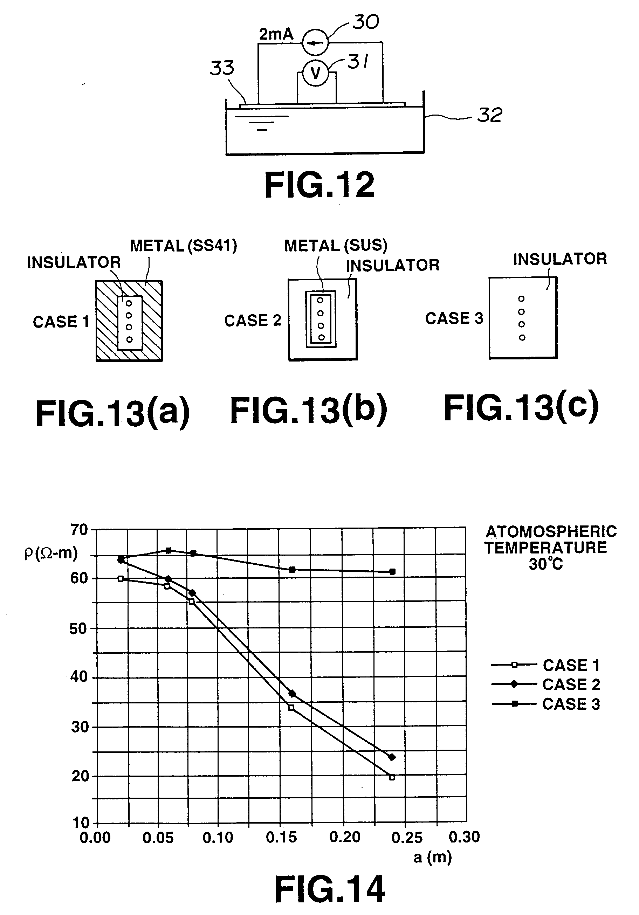

As explained above, in the present embodiment, the electrode plate 11 is surrounded by the chassis 21 having a width of W/6 so that the influences of coating peeling-off and rust generation on the specific resistance $\rho e$ can be suppressed to its minimum level. Figs. 12 to 14 show results of tests for confirming the validity of the surrounding of the periphery of the electrodes by the metal with the predetermined width.

More in detail, as an experimental device shown in Fig. 12, a water bath 32 is filled with tap water on which a plate 33 is floated. A constant-current source 30 and a voltmeter 31 are connected in the form of a Wenner array to four electrodes of the plate 33 to measure a specific resistance $\rho$ on the basis of the voltage and current values by changing an inter-electrode distance **a**. The electrode plates 33 for use in the tests include, as shown in Fig. 13, a plate of which entire outside is of a metal except for a portion surrounding the electrodes (case 1), a plate made up of an insulator base and a metallic strip of a predetermined width surrounding the electrodes (case 2), and a plate of an entire insulator (case 3). Graphs showing relationships between the inter-electrode distance **a** and measured resistance value $\rho$ as experimental results are shown in Fig. 14. That is, so long as a metallic strip is provided as in the case 2, the case 2 can obtain measured values substantially the same as those when the outer side is a metal as in the case 1, even if its outer side is an insulator. In this connection, the error is as small as at most a maximum of about 18%.

This means that even when the surface of the shield type excavator is changed with time from its metal exposed state to rust generation, this has less influence on the measured specific resistance value. It will be seen from comparison with the case 1 that the case 3 without the metallic strip has great influence on the measured value because it is changed about 300% compared to the case 1.

A change from the case 1 to the case 2 (or the case 3) is supposed to be a change with time from the metal exposed state to the rust generation of the surface of the shield type excavator. A change with time from the coated state to the peeled-off of the coating is similarly considered.

It will be clear from the above experimental results that the surrounding of the electrode plate 11 by the chassis 21 having the predetermined width has great effect, that is, the change with time can be suppressed to its minimum level and only slight modification of correction coefficients is required. Conversely, without the chassis 21, it may be impossible to cope with only by modifying the correction coefficient since the specific resistance changes remarkably with time.

8

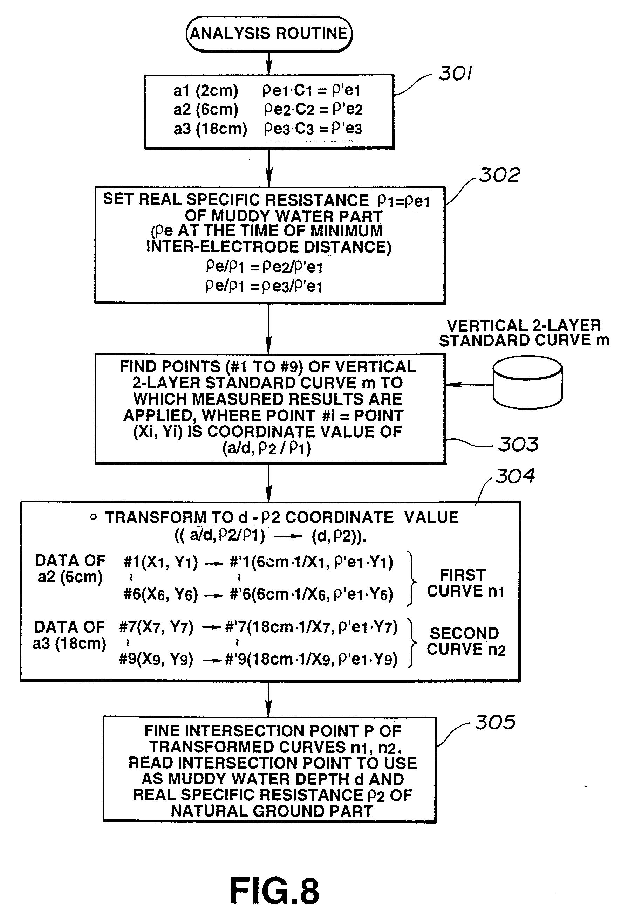

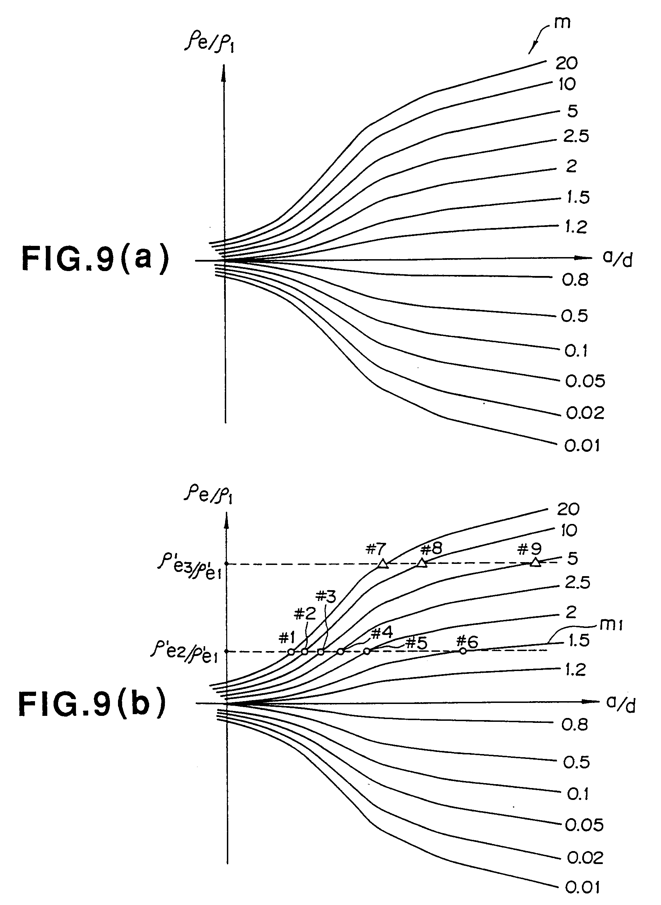

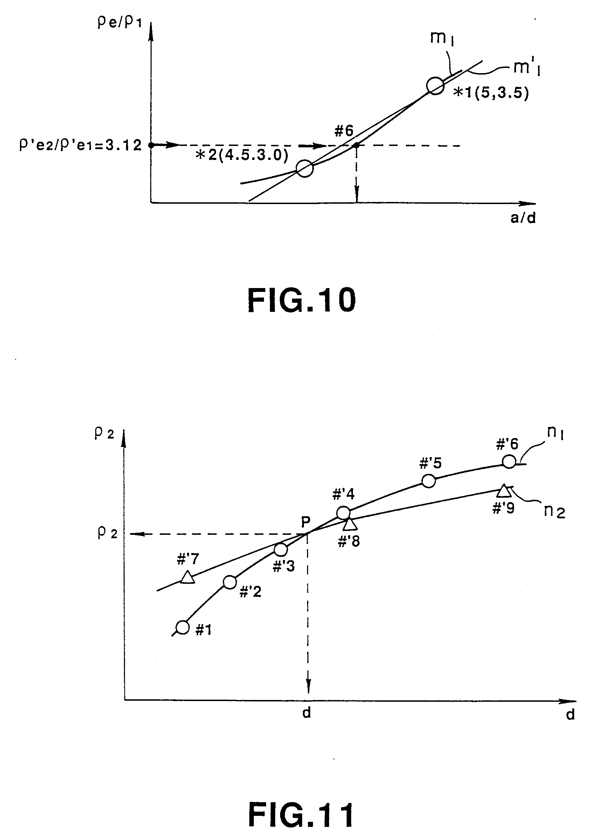

In a next step 202, the processing is shifted to such an analysis routine as shown in Fig. 8 to find a depth **d** of the muddy water part through calculation of the above expression (2). Explanation will be made as to this analysis routine by referring also to graphs of Figs. 9 and 10.

When the analysis routine starts its operation as shown in Fig. 8, the values of the corrected specific resistances $\rho'e1$, $\rho'e2$ and $\rho'e3$ are taken in (step 301). And the real specific resistance $\rho1$ of the muddy water part 23 is defined as the specific resistance $\rho'e1$ when the inter-electrode distance is minimum. In this connection, when the inter-electrode distance **a** is not such a sufficiently small value as, for example, less than 2 cm, a relationship $\rho1 = \rho'e1$ is not satisfied. Thus, the distance **a** is required to be set at such a small value.

The above operational expression (2) is reduced to the following expression.

$$\rho e/\rho1 \ = \ f(a/d, \ \rho2/\rho1) \qquad (7)$$

where, f() represents a predetermined function.

A curve **m** (which will be referred to as the vertical 2-layer standard curve, hereinafter) expressed by such a function is shown in Fig. 9(a) having abscissa a/d and ordinate $\rho e/\rho1$ with respect to parameters $\rho2/\rho1$ of 20, 10,... Data on such vertical 2-layer standard curve m are assumed to be previously stored in a predetermined memory.

Next, the values of the specific resistances in the case of the electrode set a2 are substituted into the left side of the above expression (7) as follows to calculate corresponding points #1 to #6 on the vertical 2-layer standard curve **m** (refer to Fig. 9(b)).

$$\rho e/\rho1 \ = \ \rho'e2/\rho'e1 \qquad (8)$$

Similarly, the values of the specific resistances in the case of the electrode set a3 are substituted into the left side of the above expression (7) as follows to calculate corresponding points #7 to #9 on the vertical 2-layer standard curve **m** (refer to Fig. 9(b)).

$$\rho e/\rho1 \ = \ \rho'e3/\rho'e1 \qquad (9)$$

These points #1 to #9 have a dimension of (a/d, $\rho2/\rho1$).

Fig. 10 shows an example of how to find the above point #6. Two-dimension coordinate positions (a/d, $\rho e/\rho1$) corresponding to the vertical 2-layer standard curve **m** are previously stored in the aforementioned memory. Thus, when the value $\rho e/\rho1$ of the expression (9) is 3.12, two points of *1 (5.0,3.5) and *2 (4.5,3.0) on a predetermined curve m1 having the value 3.12 therebetween are read out from the above memory. And the curve between the 2 points *1 and *2 is approximated as a straight line m'1 therebetween so that a coordinated position a/d = X6 of the point #6 is obtained as a coordinate position of a point corresponding to an intersection of the straight line m'1 for the coordinate position 3.12. Meanwhile, since $\rho2/\rho1$ of the above predetermined curve m1 is known (refer to Fig. 9(b)), the coordinate position $\rho2/\rho1 = Y6$ of the point #6 is obtained. With regard to the other points #1,..., corresponding coordinate positions (a/d, $\rho2/\rho1$) are similarly obtained (step 303).

The coordinate positions (a/d, $\rho2/\rho1$) of the points #1 to #9 thus obtained are subjected to a coordinate transformation of coordinate positions (d, $\rho2$).

More specifically, since the points #1 to #6 are data when a = 6 cm and $\rho1$ is nearly equal to $\rho'e1$, the obtained coordinate positions (a/d,$\rho2/\rho1$) are coordinate-transformed into corresponding coordinate positions (6cm•d/a,$\rho'e1•\rho2/\rho1$).

Similarly, since the points #7 to #9 are data when a = 18 cm and $\rho1$ is nearly equal to $\rho'e1$, the obtained coordinate positions (a/d,$\rho2/\rho1$) are coordinate-transformed into corresponding coordinate positions (18cm•d/a,$\rho'e1•\rho2/\rho1$). The coordinate positions #'1 to #'6 thus coordinate-transformed corresponding to the points #1 to #6 are shown in such a first curve n1 as shown in Fig. 11. Meanwhile, the coordinate positions #'7 to #'9 thus coordinate-transformed corresponding to the points #7 to #9 are shown in such a second curve n2 as shown in Fig. 11. An intersection point P (d,$\rho2$) of these curves n1 and n2 is calculated and the then coordinate position of the intersection point is used as the muddy water depth **d** and the real specific resistance $\rho2$ of the ground part 22 (step 305).

The aforementioned analysis routine mathematically means that $\rho'e2$ is substituted for $\rho1$ in the expression (2) with **d** and $\rho2$ being unknown to find two expressions and the found two simultaneous equations are solved for **d** and $\rho2$.

The calculation values **d** and $\rho 2$ obtained through the analysis routine are based on the assumption that the correction was correctly made. However, as mentioned above, the correction may be sometimes varied as the surface condition of the shielding main body 9 varies with time. Thus, judgement is made as to whether or not the correction was correctly done.

More in detail, a reference muddy water depth dr detected by the rod 12 is read out from the memory (step 203) and it is judged whether or not an error for a calculated muddy water depth **d** is within ±15% of the reference muddy water depth dr (step 204). As a result, when the error is judged to be within the above range, it is determined that the correction was correctly made and the control goes to the step 101 to perform the similar operation again.

Meanwhile, when it is judged in the step 204 that the error is out of the above range, it is determined that the correction was not made correctly due to the change with time and the correction coefficients C1, C2 and C3 are modified (step 205).

The above correction coefficients are expressed by such a correction curve $l_1$ as shown in the step 205 in Fig. 7. It is experimentally known that there is a predetermined proportional relationship between the inter-electrode distance a and correction coefficient C, and that the larger the inter-electrode distance **a** is made the more the correction coefficient is influenced by the surface of the shielding main body 9, as will be seen from the curve $l_1$. The case where the calculated muddy water depth **d** is larger than the reference muddy water depth dr means the case where the coating is peeled off and the specific resistance $\rho e$ is reduced. Thus, the correction coefficient curve is changed from the curve $l_1$ to a curve $l_2$ having a gradient larger than the curve $l_1$ so that the correction coefficients C2 and C3 become large and the calculation is again carried out based on correction coefficients C1, C2 and C3 on the curve $l_2$ in the step 201. When the calculated muddy water depth **d** is smaller than the reference muddy water depth dr, on the other hand, this means that the underlying metal got rusty and the specific resistance $\rho e$ was increased. Accordingly, the correction curve is changed to the curve having the smaller gradient and the calculation is again carried out in the step 201 based on correction coefficients C1, C2 and C3 on the changed correction curve. When the inter-electrode distance corresponds to the minimum one of the electrode set a1, the correction coefficient is not substantially influenced by changes in the surface condition of the shielding main body 9, so that, when it is desired to change the correction curve, the correction coefficient C1 can be set stationary.

In this connection, initial values of the correction coefficients are supposed to be previously set at the time of factory shipping.

In this way, whenever the correction coefficients C1,... are modified, the analysis routine is executed. When an error for the muddy water depth **d** thus calculated becomes within the predetermined range (NO in the step 204), the then muddy water depth **d** is displayed on the display unit. In this way, monitoring of the condition of the collapsed portion 24 is realized on a real time basis. Although the calculation has been carried out on the assumption that the real specific resistance $\rho 1$ is equal to the correction specific resistance $\rho' e1$ in this embodiment, it is of course possible in some cases to perform the calculation on the assumption that the real specific resistance $\rho 1$ also has an unknown value. In the latter case, this mathematically means to solve three simultaneous equations with respect to the expression (2).

Further, in the present embodiment, the correction of the specific resistances has been carried out taking the change with time into consideration. When the change with time is small or can be sufficiently suppressed by the chassis 21, however, such correction may be omitted. Or when the change with time is small, the provision of the chassis 21 may be omitted.

It goes without saying that the present invention is not limited to the shield type excavator but may be applied to any types of underground excavators including excavators having small diameters.

INDUSTRIAL APPLICABILITY

As has been explained in the foregoing, in accordance with the present invention, even when the specific resistance of a collapsed portion changes from time to time as the underground excavator advances, the monitoring of the collapsed portion can be always accurately realized on a real time basis. In addition, even when the condition of the surface of the excavator is changed with time due to the excavating operation, the monitoring of the collapsed portion can be always accurately realized on a real time basis.

**Claims**

1. A device for monitoring a collapsed portion in natural ground for use with an underground excavator, in which a group of at least eight electrodes are arranged in a row on an electrode plate provided on a surface of the underground excavator, one pair of power-supply electrodes and one pair of detection electrodes located inside the power-supply electrode pair are selected from the group of electrodes, a power supply is connected to said selected power-supply electrodes and a voltmeter is connected across said selected detection electrodes to detect a voltage appearing across said selected detection electrodes, a specific resistance of the collapsed portion is calculated on the basis of the detected voltage and a current supplied across said selected power-supply electrodes, and the collapsed portion is monitored on the basis of a depth of a muddy water part between the underground excavator and the natural ground obtained from the calculated specific resistance,

said device comprising:

change-over means for sequentially selecting three or more of different combinations of said one pair of power-supply electrodes and said one pair of detection electrodes to sequentially switch and connect said power supply and said voltmeter;

first calculation means for calculating, on the basis of the detected voltage for each of the combinations selected by said change-over means, a specific resistance of the collapsed portion for each of the combinations; and

second calculation means for sequentially substituting the specific resistance for each of the combinations calculated by said first calculation means and a distance between the selected power-supply electrodes for each of the combinations into an operational expression showing relationships among the specific resistance calculated by said first calculation means, the distance between the selected power-supply electrodes, a real specific resistance of a muddy water part of the collapsed portion, a real specific resistance of a ground part of the collapsed portion and a depth of the muddy water part to obtain three or more equations and for calculating said depth of the muddy water part in accordance with said three or more equations.

2. A device for monitoring a collapsed portion in the natural ground for use with an underground excavator as set forth in claim 1, wherein said real specific resistance of the muddy water part in said operational expression corresponds to the specific resistance calculated by said first calculation means when one of the combinations providing a minimum distance between said one pair of power-supply electrodes is selected by said change-over means, and said second calculation means calculates said muddy water depth in accordance with two or more equations obtained by sequentially substituting into said operational expression the specific resistance for each of the combinations calculated by said first calculation means and the distance between the selected power-supply electrodes for each of the combinations.

3. A device for monitoring a collapsed portion in natural ground for use with an underground excavator, in which a group of at least eight electrodes are arranged in a row on an electrode plate provided on a surface of the underground excavator, one pair of power-supply electrodes and one pair of detection electrodes located inside the power-supply electrode pair are selected from the group of electrodes, a power supply is connected to said selected power-supply electrodes and a voltmeter is connected across said selected detection electrodes to detect a voltage appearing across said selected detection electrodes, a specific resistance of the collapsed portion is calculated on the basis of the detected voltage and a current supplied across said selected power-supply electrodes, and the collapsed portion is monitored on the basis of a depth of a muddy water part between the underground excavator and the natural ground obtained from the calculated specific resistance,

said device comprising:

change-over means for sequentially selecting three or more of different combinations of said one pair of power-supply electrodes and said one pair of detection electrodes to sequentially switch and connect said power supply and said voltmeter;

first calculation means for calculating, on the basis of the detected voltage for each of the combinations selected by said change-over means, a specific resistance of the collapsed portion for each of the combinations;

correction means for correcting said specific resistance calculated by said first calculation means on the basis of a predetermined correction coefficient;

second calculation means for sequentially substituting the specific resistance for each of the combinations corrected by said correction means and a distance between the selected power-supply electrodes for each of the combinations into an operational expression showing relationships among the specific resistance corrected by said correction means, the distance between the selected power-supply electrodes, a real specific resistance of a muddy water part of the collapsed portion, a real specific resistance of a ground part of the collapsed portion and a depth of the muddy water part to obtain three or more equations and for calculating said depth of the muddy water part in accordance with said three or more equations;

calculation processing control means, when a difference between the muddy water depth calculated by said second calculation means and a reference muddy water depth previously detected is equal to or larger than a predetermined value, for changing said correction coefficient of said correction means in accordance with said difference to repetitively execute the correcting operation of said correction means and the calculating operation of said second calculation means; and

means, when said difference is smaller than said predetermined value, for monitoring a collapse in the natural ground on the basis of said muddy water depth calculated by said second calculation means.

4. A device for monitoring a collapsed portion in the natural ground for use with an underground excavator as set forth in claim 3, wherein said real specific resistance of the muddy water part in said operational expression corresponds to the specific resistance corrected by said correction means when one of the combinations providing a minimum distance between said one pair of power-supply electrodes is selected by said change-over means, and said second calculation means calculates said muddy water depth in accordance with two or more equations obtained by sequentially substituting into said operational expression the specific resistance for each of the combinations corrected by said correction means and the distance between the selected power-supply electrodes for each of the combinations.

5. A device for monitoring a collapsed portion in the natural ground for use with an underground excavator as set forth in claim 3, further comprising a rod provided to be externally projected from a surface of said underground excavator, and wherein said reference muddy water depth is previously detected on the basis of a stroke of said rod when the rod is brought at its tip end into contact with the natural ground.

6. A device for monitoring a collapsed portion in natural ground for use with an underground excavator, wherein an electrode plate made of an insulator is provided on a surface of said underground excavator made of metal, a group of at least four electrodes are arranged in a row on said electrode plate, one pair of power-supply electrodes and one pair of detection electrodes different from said one pair of power-supply electrodes are selected from said group of electrodes, a power supply is connected to said selected power-supply electrodes and a voltmeter is connected across said selected detection electrodes to detect a voltage appearing across said selected detection electrodes, a specific resistance of said collapsed portion is calculated on the basis of the detected voltage and a current supplied to said selected power-supply electrodes, and a collapse in the natural ground is monitored on the basis of a depth of a muddy water part between a main body of the underground excavator and the natural ground obtained from the calculated specific resistance, and wherein an outer periphery of said electrode plate is surrounded by a metal having a predetermined width.

**FIG.1**

**FIG.2**

**FIG.3**

**FIG.4**

**FIG.5**

START

SELECT ELECTRODE
SET a1
*101*

MEASURE VOLTAGE V
& CURRENT i
*102*

FIND SPECIFIC RESISTANCE
$\rho e_1$ FROM $\rho e = 2\pi \cdot a \cdot V/i$
*103*

SELECT NEXT ELECTRODE
SET FOR SIMILAR PROCESSING
*104*

EXECUTED
FOR ALL ELECTRODE
SETS ?
*105*

NO   YES

OBTAIN FOLLOWING DATA

| a1 (2cm) | $\rho e_1$ |
| a2 (6cm) | $\rho e_2$ |
| a3 (18cm) | $\rho e_3$ |

*106*

A

# FIG.6

MALTIPLY CORRECTION COEFFICIENT
C FOR CORRECTION OF INFLUENCES
OF NEIGHBORING METALS

a1 (2cm)   $\rho_{e1} \cdot C_1 = \rho'_{e1}$
a2 (6cm)   $\rho_{e2} \cdot C_2 = \rho'_{e2}$
a3 (18cm)  $\rho_{e3} \cdot C_3 = \rho'_{e3}$

*201*

FIND ANALYSIS VALUE OF MUDDY
WATER DEPTH d THROUGH
ANALYSIS ROUTINE (FIG.8 )

*202*

TAKE IN DETECTED MUDDY WATER
DEPTH dr PERIODICALLY

*203*

IS
ERROR OF d
MORE THAN 15%
OF dr
?

*204*

NO → TO START

YES

○ CHANGE GRADIENT OF
CORRECTION CURVE

CORRECTION
COEFFICIENT C

*205*

INTER-
ELECTRODE
DISTANCE

**FIG.7**

17

ANALYSIS ROUTINE

301

a1 (2cm)     $\rho_{e1} \cdot C_1 = \rho'_{e1}$
a2 (6cm)     $\rho_{e2} \cdot C_2 = \rho'_{e2}$
a3 (18cm)    $\rho_{e3} \cdot C_3 = \rho'_{e3}$

302

SET REAL SPECIFIC RESISTANCE $\rho_1 = \rho_{e1}$
OF MUDDY WATER PART
($\rho_e$ AT THE TIME OF MINIMUM
INTER-ELECTRODE DISTANCE)
$\rho_e / \rho_1 = \rho_{e2} / \rho'_{e1}$
$\rho_e / \rho_1 = \rho_{e3} / \rho'_{e1}$

VERTICAL 2-LAYER
STANDARD CURVE m

FIND POINTS (#1 TO #9) OF VERTICAL
2-LAYER STANDARD CURVE m TO
WHICH MEASURED RESULTS ARE
APPLIED, WHERE POINT #i = POINT
($X_i$, $Y_i$) IS COORDINATE VALUE OF
($a/d$, $\rho_2 / \rho_1$)

303

304

○ TRANSFORM TO $d$ - $\rho_2$ COORDINATE  VALUE
(($a/d$, $\rho_2/\rho_1$) → ($d$, $\rho_2$)).

DATA OF    #1($X_1$, $Y_1$) → #'1(6cm·1/$X_1$, $\rho'_{e1} \cdot Y_1$)  ⎫
a2 (6cm)        ↓                    ↓                              ⎬  FIRST
            #6($X_6$, $Y_6$) → #'6(6cm·1/$X_6$, $\rho'_{e1} \cdot Y_6$)  ⎭  CURVE n1

DATA OF    #7($X_7$, $Y_7$) → #'7(18cm·1/$X_7$, $\rho'_{e1} \cdot Y_7$)  ⎫ SECOND
a3 (18cm)       ↓                    ↓                              ⎬ CURVE n2
            #9($X_9$, $Y_9$) → #'9(18cm·1/$X_9$, $\rho'_{e1} \cdot Y_9$)  ⎭

FINE INTERSECTION POINT P OF
TRANSFORMED CURVES n1, n2.
READ INTERSECTION POINT TO USE
AS MUDDY WATER DEPTH $d$ AND
REAL SPECIFIC RESISTANCE $\rho_2$ OF
NATURAL GROUND PART

305

# FIG.8

FIG.9(a)

FIG.9(b)

## FIG.10

## FIG.11

**FIG.12**

**FIG.13(a)**    **FIG.13(b)**    **FIG.13(c)**

**FIG.14**

## INTERNATIONAL SEARCH REPORT

| International application No. |
|---|
| PCT/JP93/00991 |

**A. CLASSIFICATION OF SUBJECT MATTER**

Int. Cl$^5$ E21D9/06, G01B7/00, G01D21/00

According to International Patent Classification (IPC) or to both national classification and IPC

**B. FIELDS SEARCHED**

Minimum documentation searched (classification system followed by classification symbols)

Int. Cl$^5$ E21D9/06, G01B7/00, G01D21/00

Documentation searched other than minimum documentation to the extent that such documents are included in the fields searched

Jitsuyo Shinan Koho      1926 - 1992
Kokai Jitsuyo Shinan Koho      1972 - 1992

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 62-178689 (NKK Corp.), August 5, 1987 (05. 08. 87), (Family: none) | 1-4 |
| A | JP, A, 3-260286 (Komatsu Ltd.), November 20, 1991 (20. 11. 91), & WO, A, 9114078 & EP, A, 471859 | 1-4 |
| A | JP, A, 3-257395 (Komatsu Ltd.), November 15, 1991 (15. 11. 91), (Family: none) | 1-4 |
| A | JP, A, 63-134785 (Komatsu Ltd.), June 7, 1988 (07. 06. 88), (Family: none) | 6 |
| A | JP, A, 3-257397 (Komatsu Ltd.), November 15, 1991 (15. 11. 91), (Family: none) | 6 |

| [X] Further documents are listed in the continuation of Box C. | [ ] See patent family annex. |
|---|---|

\*    Special categories of cited documents:

"A"   document defining the general state of the art which is not considered to be of particular relevance

"E"   earlier document but published on or after the international filing date

"L"   document which may throw doubts on priority claim(s) or which is cited to establish the publication date of another citation or other special reason (as specified)

"O"   document referring to an oral disclosure, use, exhibition or other means

"P"   document published prior to the international filing date but later than the priority date claimed

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| September 27, 1993 (27. 09. 93) | October 19, 1993 (19. 10. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)